# EUROPEAN PATENT APPLICATION

(11) **EP 3 369 895 A2**
(43) Date of publication of application: **05.09.2018**
(21) Application number: 18158914.4
(22) Date of filing: 27.02.2018
(51) Int. Cl.: F01D 25/20

(54) **SYSTEM AND METHOD FOR MONITORING A LUBRICATION SYSTEM OF A TURBOMACHINE USING A MODEL**

(30) Priority: 02.03.2017 US 201715448111
(71) Applicant: General Electric Company, Schenectady, NY 12345 (US)
(72) Inventor: AHUMADA PARAS, Mareldi, 76146 MX Queretaro (MX); VEGA PAEZ, Jose Leon, 76146 MX Queretaro (MX); ESCOBEDO HERNANDEZ, Ernesto Heliodoro, 76146 MX Queretaro (MX); MENDOZA MARTINEZ, Jose, 76146 Queretaro (MX)
(74) Representative: Lee, Brenda

(57) **Abstract**

A power production system includes a gas turbine system 12 configured to combust a fuel to produce a power. The power production system further includes a lubrication system 50 fluidly coupled to the gas turbine system and configured to move a lubricant through the gas turbine system during operations of the gas turbine system. The power production system also includes a processor communicatively coupled to the power production system. The processor 39 is configured to receive input data from one or more sensors 42 disposed on the gas turbine system, the lubrication system, or the combination thereof. The processor is further configured to execute one or more models to derive a condition of the lubrication system, the gas turbine system, or a combination thereof.

## Description

### BACKGROUND

The subject matter disclosed herein relates to turbomachinery systems, and to systems and methods for improved turbomachinery oil lubrication systems.

Machinery and equipment often include components (e.g., rotating or moving components) that use lubrication during operations. This lubrication may be provided by the application of oil, for example, via an oil lubrication system. For example, certain power production equipment, such as gas turbine engines coupled to electrical generators may include an oil lubrication system suitable for providing lubrication to components, such as turbomachinery moving components. It may be useful to improve turbomachinery oil lubrication systems.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

A first embodiment provides a power production system that includes a gas turbine system configured to combust a fuel to produce a power. The power production system further includes a lubrication system fluidly coupled to the gas turbine system and configured to move a lubricant through the gas turbine system during operations of the gas turbine system. The power production system also includes a processor communicatively coupled to the power production system. The processor is configured to receive input data from one or more sensors disposed on the gas turbine system, the lubrication system, or the combination thereof. The processor is further configured to execute one or more models to derive a condition of the lubrication system, the gas turbine system, or a combination thereof.

A second embodiment provides a monitoring system. The monitoring system includes a processor. The processor is configured to monitor operations of a gas turbine engine system. The processor is further configured to receive input data from one or more sensors disposed on the gas turbine system, a lubrication system, or the combination thereof. The processor is additionally configured to execute one or more models to derive a condition of the lubrication system, the gas turbine system, or a combination thereof, wherein the one or more models comprises a historical model and a current model, and wherein the lubrication system is configured to move lubricant through the gas turbine engine system.

In accordance with a third embodiment, a method includes monitoring, via a processor, operations of a gas turbine engine system. The method further includes receiving, via the processor, input data from one or more sensors disposed on the gas turbine system, a lubrication system, or the combination thereof. The method additionally includes executing, via the processor, one or more models to derive a condition of the lubrication system, the gas turbine system, or a combination thereof, wherein the one or more models comprises a historical model and a current model, and wherein the lubrication system is configured to move lubricant through the gas turbine engine system.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of a power production system including a gas turbine system and a lubrication system 50;
FIG. 2 is a flowchart of an embodiment of a process for deriving certain lubrication system and/or gas turbine system conditions;
FIG. 3 is a flowchart of an embodiment of a process for deriving certain lubrication system and/or gas turbine system conditions based on sump system data;
FIG. 4 is a flowchart of an embodiment of a process for deriving certain lubrication system and/or gas turbine system conditions based on fluid level data;
FIG. 5 is a flowchart of an embodiment of a process for deriving certain lubrication system and/or gas turbine system conditions based on sump system temperature data and gas turbine system power data;
FIG. 6 is a flowchart of an embodiment of a process for deriving certain lubrication system and/or gas turbine system conditions based on temperature data from two or more sump systems; and
FIG. 7 is a flowchart of an embodiment of a process for combining various measurement types from various systems of FIG. 1 to derive lubrication system and/or gas turbine system conditions.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed towards systems and methods for improving turbomachinery life, including life of lubrication system components, via predictive techniques. In one embodiment, a model is constructed, which may advantageously model a gas turbine lubrication, and incorporate as input a variety of temperature, pressure and level sensor readings. The model may include one or more submodels, such as historical submodels, and current operations submodels. The historical submodels may be used to derive baseline information (e.g., expected oil level, temperatures, pressures) while the current operations submodels may derive conditions based on current sensor readings. The current operations submodel derivations may then be compared to the historical submodel via a process described in more detail below, and the comparison may then be used to predict certain lubrication system conditions. Further, a feedback loop may be used to "evolve" the historical submodels, resulting in more accurate and efficient predictions. Statistical techniques may be used to create and/or apply the models, resulting in more efficient computations.

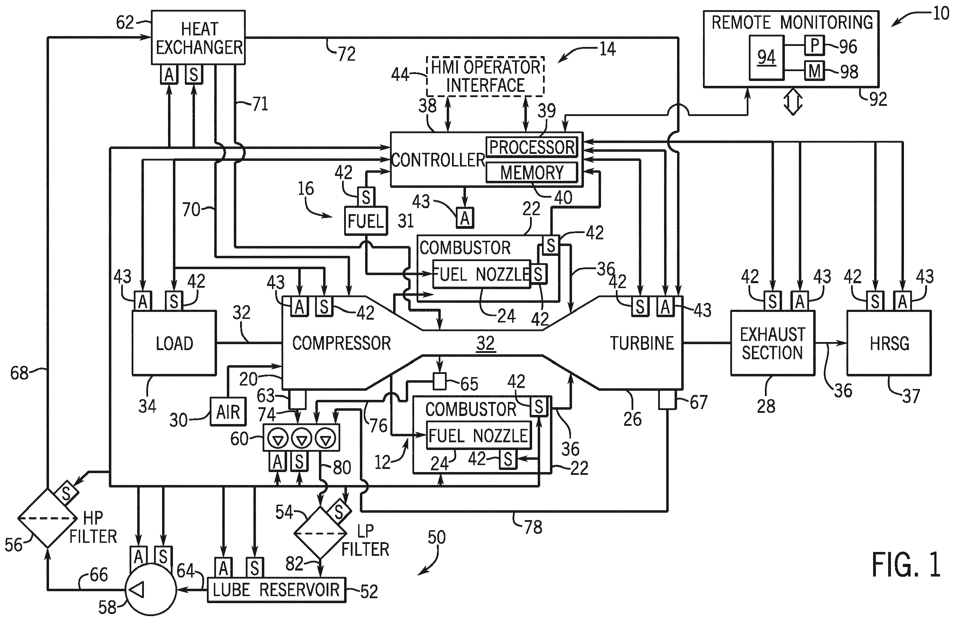

It may be beneficial to describe an industrial system that may benefit from the techniques described herein. With the foregoing in mind, an example of an industrial system 10 is illustrated in FIG. 1. While the present embodiments are discussed with respect to a gas turbine system (e.g., as illustrated in FIG. 1), it should be appreciated that the industrial system 10 may, in some embodiments, include a steam turbine system, a hydraulic turbine system, one or more compressor systems (e.g., aeroderivative compressors, reciprocating compressors, centrifugal compressors, axial compressors, screw compressors, and so forth), one or more electric motor systems, industrial systems including, for example, fans, extruders, blowers, centrifugal pumps, or any of various other industrial machinery that may be included in an industrial plant or other industrial facility.

As illustrated in FIG. 1, the industrial system 10 includes the gas turbine system 12, a monitoring and control system 14, and a fuel supply system 16. The gas turbine system 12 may include a compressor 20, combustion systems 22, fuel nozzles 24, a gas turbine 26 (e.g., turbine section), and an exhaust section 28. During operation, the gas turbine system 12 may pull air 30 into the compressor 20, which may then compress the air 30 and move the air 30 to the combustion system 22 (e.g., which may include a number of combustors). In the combustion system 22, the fuel nozzle 24 (or a number of fuel nozzles 24) may inject fuel that mixes with the compressed air 30 to create, for example, an air-fuel mixture.

The air-fuel mixture may combust in the combustion system 22 to generate hot combustion gases, which flow downstream into the turbine 26 to drive one or more turbine stages. For example, the combustion gases may move through the turbine 26 to drive one or more stages of turbine blades, which may in turn drive rotation of a shaft system 32. The shaft system 32 may connect to a load 34, such as a generator that uses the torque of the shaft 32 to produce electricity. After passing through the turbine 26, the hot combustion gases may vent as exhaust gases 36 into the environment by way of the exhaust section 28. The exhaust gas 36 may include gases such as carbon dioxide (CO₂), carbon monoxide (CO), nitrogen oxides (NOₓ), and so forth.

The exhaust gas 36 may include thermal energy, and the thermal energy may be recovered by a heat recovery steam generation (HRSG) system 37. In combined cycle systems, such as the power plant 10, hot exhaust 36 may flow from the gas turbine 26 and pass to the HRSG 37, where it may be used to generate high-pressure, high-temperature steam. The steam produced by the HRSG 37 may then be passed through a steam turbine engine for further power generation. In addition, the produced steam may also be supplied to any other processes where steam may be used, such as to a gasifier used to combust the fuel to produce the untreated syngas. The gas turbine engine generation cycle is often referred to as the "topping cycle," whereas the steam turbine engine generation cycle is often referred to as the "bottoming cycle." Combining these two cycles may lead to greater efficiencies in both cycles. In particular, exhaust heat from the topping cycle may be captured and used to generate steam for use in the bottoming cycle. In certain embodiments, liquid flows into drums included in the HRSG 37 may be controlled via flow control, for example, water flow control, as described in more detail below.

In certain embodiments, the system 10 may also include a controller 38. The controller 38 may be communicatively coupled to a number of sensors 42, a human machine interface (HMI) operator interface 44, and one or more actuators 43 suitable for controlling components of the system 10. The actuators 43 may include valves, switches, positioners, pumps, and the like, suitable for controlling the various components of the system 10. The controller 38 may receive data from the sensors 42, and may be used to control the compressor 20, the combustors 22, the turbine 26, the exhaust section 28, the load 34, the HRSG 37, and so forth.

In the current embodiments, the controller 38 may additionally control a lubrication system 50 to provide lubrication for the gas turbine system 12. By way of example only, the lubrication system 50 may include a lube reservoir 52, filter systems 54, 56, a pressure pump 58, scavenger pumps 60, a heat exchanger 62, and sump systems 63, 65, 67. In operations, the controller 38 may direct lubricant (e.g., synthetic oil) from the lube reservoir 52 via the pressure pump 58 into the high pressure filter system 56 through conduits 64, 66. Filtered lubricant may then be directed to the heat exchanger 62, for example, to cool the filtered lubricant through conduit 68. The cooled filter lubricant may then be provided to one or more components of the gas turbine system 12, such as the compressor 20, the shaft system 32, and/or the turbine 26 via a variety of lubrication channels and/or spray jets fluidly coupled to conduits 70, 71, 72. The sump system 63 may be and "A" sump system 63 fluidly coupled to conduit 70 and aiding in compressor 20 lubrication, while the sump system 65 may be a "B" sump system 65 fluidly coupled to conduit 71 and aiding in mid-system lubrication, and the sump system 67 may be a "D" sump 67 fluidly coupled to conduit 72 and aiding in turbine 26 lubrication. The sump systems 63, 65, 67 may receive the lubrication fluid and provide for a pressurized container such that the lubrication fluid may be pressurized (e.g., negatively pressurized or positively pressurized) during operations, thus providing a more consistent lubrication pressure and more evenly coating of lubricant.

The scavenger pumps 60 may then recycle the lubrication fluid via conduits 74, 76, 78 back into the lube reservoir 50. For example, the scavenger pumps 60 may direct the lubrication fluid into the low pressure filter system 54 via conduit 80 and then into the lubrication reservoir 52 via conduit 82. Thus recycled, the lubrication fluid may be used to continuously lubricate the gas turbine system 12. It is to be understood that the lubrication system 50 may include, in other embodiments, more or less components, different component arrangements, as well as other components, including actuators 43 (e.g., valves), pumps, conduits, filters, sump systems, and so on. It is also to be understood that all components of the lubrication system 50 (e.g., lube reservoir 52, filter systems 54, 56, pressure pump 58, scavenger pumps 60, heat exchanger 62, sump systems 63, 65, 67, conduits 64, 66, 68, 70, 71, 72, 74, 76, 78, 80, 82) include at least one sensor 42, and most components (e.g., lube reservoir 52, filter systems 54, 56, pressure pump 58, scavenger pumps 60, heat exchanger 62, sump systems 63, 65, 67, conduits 64, 66, 68, 70, 71, 72, 74, 76, 78, 80, 82) also include at least one actuator 43). Lubrication may reduce friction, remove contaminants, cool the various components, and thus extends useful life for the components. The techniques described herein improve on the application of lubricant by deriving when certain undesired maintenance events may have occurred or will occur, such as leaks in the lubrication system 50, undesired lubricant consumption, increased friction (e.g., bearing issues, abrasion), and so on.

The HMI operator interface 44 may be used to receive operator inputs that may be provided to the controller 38. As will be further appreciated, in response to the sensor 42 data and/or inputs received via the HMI operator interface 44, the controller 38 may derive the occurrence of the undesired maintenance events (e.g., leaks in the lubrication system 50, undesired lubricant consumption, increased friction). The controller 38 may then issue alarms or alerts, as well as control actions (e.g., slowing speed of the gas turbine system 12, stopping the gas turbine system 12) based on the derivations.

In certain embodiments, the HMI operator interface 44 may be executable by one or more computer systems of the system 10. A plant operator may interface with the industrial system 10 via the HMI operator interface 44. Accordingly, the HMI operator interface 44 may include various input and output devices (e.g., mouse, keyboard, monitor, touch screen, or other suitable input and/or output device) such that the plant operator may provide commands (e.g., control and/or operational commands) to the controller 38. Further, operational information from the controller 38 and/or the sensors 42 may be presented via the HMI operator interface 44. Similarly, the controller 38 may be responsible for controlling one or more final control elements coupled to the components (e.g., the compressor 20, the turbine 26, the combustors 22, the load 34, and so forth) of the industrial system 10 such as, for example, one or more actuators 43, transducers, and so forth.

In certain embodiments, the sensors 42 may be any of various sensors useful in providing various operational data to the controller 38. For example, the sensors 42 may provide flow, pressure, and temperature of the various components of lubrication system 50 (e.g., lube reservoir 52, filter systems 54, 56, pressure pump 58, scavenger pumps 60, heat exchanger 62, sump systems 63, 65, 67, conduits 64, 66, 68, 70, 71, 72, 74, 76, 78, 80, 82) and components of the compressor 20, shaft system 32 and turbine 26. The sensors 42 may also sense power (e.g., in megawatts), speed and temperature of the turbine 26, vibration of the compressor 20 and the turbine 26, as well as flow for the exhaust gas 36, temperature, pressure and emission (e.g., CO₂, NOx) levels in the exhaust gas 36, carbon content in the fuel 31, temperature of the fuel 31, temperature, pressure, clearance of the compressor 20 and the turbine 26 (e.g., distance between the rotating and stationary parts of the compressor 20, between the rotating and stationary parts of the turbine 26, and/or between other stationary and rotating components), flame temperature or intensity, vibration, combustion dynamics (e.g., fluctuations in pressure, flame intensity, and so forth), load data from load 34, output power from the turbine 26, and so forth. The sensors 42 may also include flow sensors such as flowmeters (e.g., differential pressure flowmeters, velocity flowmeters, mass flowmeters, positive displacement flowmeters, open channel flowmeters) and liquid level sensors such as continuous level transmitters, ultrasonic transducers, laser level transmitters, and so on. Actuators 43 may include pumps, valves, linear actuators, switches, and the like.

The controller 38 may include a processor(s) 39 (e.g., a microprocessor(s)) that may execute software programs to perform the disclosed techniques. Moreover, the processor 39 may include multiple microprocessors, one or more "general-purpose" microprocessors, one or more special-purpose microprocessors, and/or one or more application specific integrated circuits (ASICS), or some combination thereof. For example, the processor 39 may include one or more reduced instruction set (RISC) processors. The controller 38 may include a memory device 40 that may store information such as control software, look up tables, configuration data, etc. The memory device 40 may include a tangible, non-transitory, machine-readable medium, such as a volatile memory (e.g., a random access memory (RAM)) and/or a nonvolatile memory (e.g., a read-only memory (ROM), flash memory, a hard drive, or any other suitable optical, magnetic, or solid-state storage medium, or a combination thereof).

The memory device 40 may store a variety of information, which may be suitable for various purposes. For example, the memory device 40 may store machine-readable and/or processor-executable instructions (e.g., firmware or software) for the processor execution. In one embodiment, the instructions, when executed, cause the processor 39 to derive certain lubrication system 50 conditions, as described in more detail below. Further, a remote monitoring system 92 may include one or more computing systems 94, having processors 96 and memory devices 98. The remote monitoring system 92 may be communicatively coupled to the controller 38 and receive data, such as real-time data, logs, and so on, from the sensors 42 and/or the actuators 43. The memories 98 may store instructions that when executed by the processors 96 cause the processors 96 to derive the lubrication system 50 conditions. The remote monitoring system 92 may be communicatively coupled to the controller 38, the sensors 42, and/or actuators 43. Indeed, the techniques described herein may be executable via the controller 38 and/or the remote monitoring system 92. The remote monitoring system 92 may, in some embodiments, not be part of the system 10 but rather located in a remote facility or in a service center. In other embodiments, the remote monitoring system 92 may be part of the system 10.

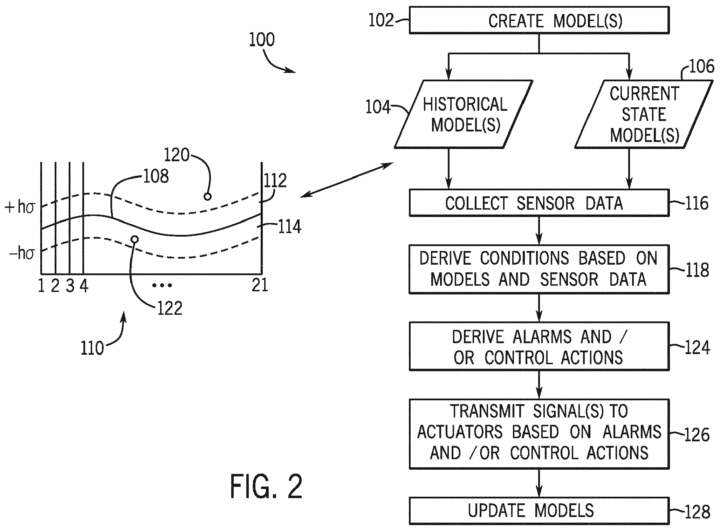

Turning now to FIG. 2, the figure is a flowchart illustrating an embodiment of a process 100 suitable for deriving certain lubrication system 50 and/or gas turbine system 12 conditions and for providing control actions based on the derived conditions. The process 100 maybe implemented as computer code or instructions stored in the memory 40 and executable via the processor 39 and/or the processors 96. Additionally or alternatively, the process 100 may be implemented in hardware, such as in a custom chip, FPGA chip, and so on. In the depicted embodiment, the process 100 may first create (block 102) one or more models 104, 106. The models 104 include historical models, while the models 106 include current state models.

The historical models 104 and current state models 106 may be created (block 102) by first pre-processing a variety of data. For example, data (e.g., temperatures, pressures, fluid flows, speeds, power, for a fleet of gas turbine systems 12 having the lubrication system 50 may be collected to identify various operating states of the gas turbine systems 12. The operating states may include a ramp up state, a baseload state, a shutdown, state, a trip state, and the like. The ramp up state may include data related to operations of the gas turbine system 12 as the gas turbine system 12 starts and increases power towards a baseload power. The baseload state may include data related to operations of the gas turbine system 12 when providing for baseload power (e.g., power such as to satisfy a minimum level of electrical demand on a power grid being served by the gas turbine system 12 over 24 hours). The shutdown state may include data related to operations of the gas turbine system 12 as the gas turbine system 12 shuts down, for example, for maintenance. The trip state may include data related to operations of the gas turbine system 12 as the gas turbine system 12 undergoes a fast shutdown.

Accordingly, in one embodiment, multiple historical models 104 and multiple current state models 106 may be created, each model 104, 106 focusing on the ramp up state, baseload state, shutdown state, and trip state, or a combination thereof. In one embodiment, the models 104, 106, maybe statistics-based models. For example, the historical models 104 may include equations derived via statistical techniques that define one or more expected curves 108 in a graph 110. The graph 110 may include as a Y-value temperatures, pressures, and/or fluid flows for the lubrication system 50 and/or the gas turbine system 12, as well as speed and/or power of the gas turbine system 12, or a combination thereof. The graph 110 may include as X-values a time, such as an operating time in fired hours, minutes, seconds, or a combination thereof. In one embodiment, the curve 108 may be based on a historical mean.

The graph 110 may also include ranges, such as a positive range 112 and a negative range 114, suitable for detecting certain lubrication system 50 and/or gas turbine system 12 issues. For example, values falling outside of the ranges 112 and 114 may be indicate of certain undesired conditions, as described in more detail below. The ranges 112 and 114 may be defined via standard deviations, via statistical max, mins, or a combination thereof. For example, the ranges 112 and 114 may be 0.1, 0.5, 1, 1.5 or more standard deviations away from the curve 108.

The process 100 may collect (block 116) current operations data via the sensors 42. The collected sensor data may then be applied to derive (block 118) conditions of the lubrication system 50 and/or the turbine system 12 by executing the models 104, 106. In one embodiment, the current operations data may be passed to the models 106 as input, and the models 106 may then derive one or more current operation metrics, such as points 120, 122 as output. Points falling outside of the ranges 112, 114, such as point 120, may thus indicate an undesired condition. Points falling inside of the ranges 112, 114, such as point 122 may indicate normal operations. In one embodiment, the points 120, 122 may be based on deriving a current statistical mean. Based on the models (e.g., temperature, fluid flow, pressure, speed, power, and so on) various conditions maybe derived (block 118), such as tank leaks, sump issues, conduit leaks excessive lubricant consumption, and so on.

The process 100 may then derive alarms/alerts and/or control actions (block 124), for example based on the derived conditions. For example, low level alerts may be derived for conditions such as excessive lubricant consumption, while high level alerts may be derived for lubricant leaks. Likewise, certain control actions may be based on the conditions found, such as control actions that would reduce speed and/or power of the gas turbine system 12, or shut down the turbine system 12.

Based on the derived alarms/alerts and/or control actions, the process 100 may then transmit signals (block 126) to actuate certain actuators. For example, valves may be actuated to reduce fuel flow, inlet guide vanes may be actuated to reduce air flow, visual alarms (e.g., lights) and/or audible alarms (e.g., sirens) may be actuated, pumps, switches, and so on, may also be actuated (block 126). The process 100 may then update (block 128) the models 104. For example, as the gas turbine system 12 is being operated, data from the operations collected in block 116 maybe used to improve the models 104. Indeed, the sensor data collected may be used to adjust the curve 108, range 112, and/or range 114 of the graph 110 to improve accuracy of the models 104. In this manner, equipment degradation, operating conditions, and the like, may be incorporated.

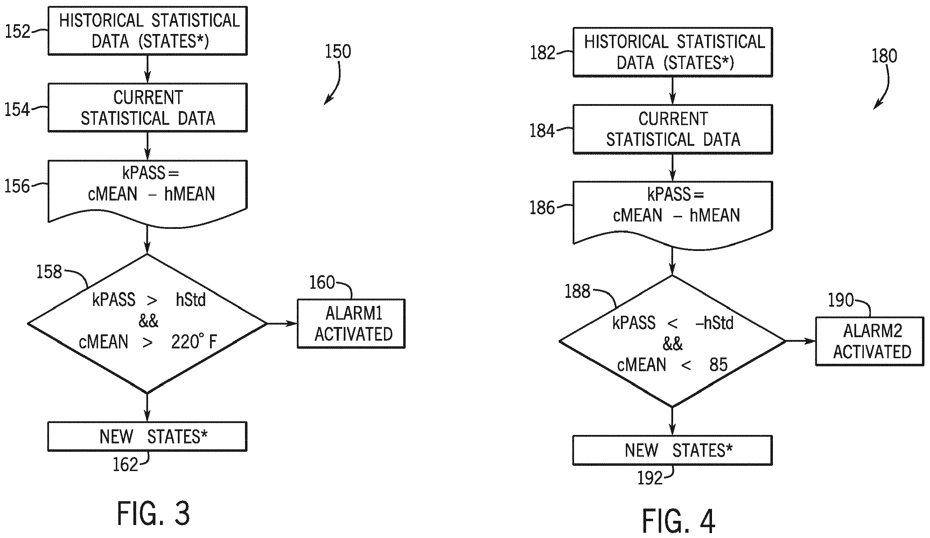

It may be beneficial to illustrate examples of processes that may derive various alarms/alerts. Accordingly, FIGS. 3-5 show derivations of a "D" sump 67 alarm based on temperature, a tank (e.g., reservoir 52) alarm based on level or flow, and a derivation of a "D" sump 67 alarm based on temperature and gas turbine system 12 power. Turning now to FIG. 3, the figure is a flowchart illustrating an embodiment of a process 150 suitable for deriving certain "D" sump 67 conditions. The process 150 may be implemented as computer code or instructions stored in the memories 40, 98 and executable via the processors 39, 96. Additionally or alternatively, the process 150 may be implemented in hardware, such as in a custom chip, FPGA chip, and so on.

In the depicted embodiment, the process 150 may first derive (block 152) a historical statistical data, such as a historical standard deviation, mean, max, min, and so on, via the historical models 104 based on temperature. That is, the historical models 104 may be used to derive the historical statistical data based on the graph 110 using temperature and/or number of fired hours. The process 150 may then derive (block 154) a current statistical data such as a current standard deviation, mean, max, min based for example, on temperature sensor data for the sensors 42 disposed in the lubrication system 50 and/or the gas turbine system 12 as inputs to model 106. The process may then derive (block 156) a kPass value based on the difference of the current Mean (derived in block 154) with the historical Mean (derived in block 152). If the kPass value is greater than a historical standard deviation and the current Mean is greater than some comparison value, such as 220°F (decision 158), then the process 150 will activate (block 160) an alarm, such as alarm 1. If the kPass value is not greater than the historical standard deviation or the current Mean is less than the comparison value (decision 158) then the alarm is not activated and new states are created (block 162). The creation of the new states (block 162) involves incorporating the currently sensed data into the historical models 104, for example, to capture degradation, operational environment differences, and so on. In this manner, the graphs 110 of the models 104 may be updated and may be used during the next iteration of the process 150.

Fluid levels may also be used to derive certain equipment conditions, such as lubrication fluid reservoir 52 conditions as shown in FIG. 4. The figure is a flowchart illustrating an embodiment of a process 180 suitable for deriving certain lubrication fluid reservoir 52 conditions based on measured fluid levels. The process 180 may be implemented as computer code or instructions stored in the memory 40 and executable via the processor 39. Additionally or alternatively, the process 180 may be implemented in hardware, such as in a custom chip, FPGA chip, and so on.

In the depicted embodiment, the process 180 may first derive (block 182) a historical statistical data, such as a historical standard deviation, mean, max, min, and so on, via the historical models 104 using fluid level data. That is, the historical models 104 may be used to derive the historical statistical data based on the graph 110 using fluid level and/or number of fired hours. The process 180 may then derive (block 184) a current statistical data such as a current standard deviation, mean, max, min based for example, on fluid level sensor data for the sensors 42 disposed in the lubrication fluid reservoir 52 as inputs to model 106. The process may then derive (block 186) a kPass value based on the difference of the current Mean (derived in block 184) with the historical Mean (derived in block 182).

If the kPass value is greater than a historical standard deviation and the current Mean is greater than some comparison value, such as a level of 85 (decision 158), then the process 150 will activate (block 160) an alarm, such as alarm 2. It is to be understood that a variety of level values may be used, including values from 0% full to 100% full. If the kPass value is not greater than the historical standard deviation or the current Mean is less than the comparison value (decision 188) then the alarm is not activated and new states are created (block 182). The creation of the new states (block 182) involves incorporating the currently sensed data into the historical models 104, for example, to capture degradation, operational environment differences, and so on. In this manner, the graphs 110 of the models 104 may be updated and may be used during the next iteration of the process 180.

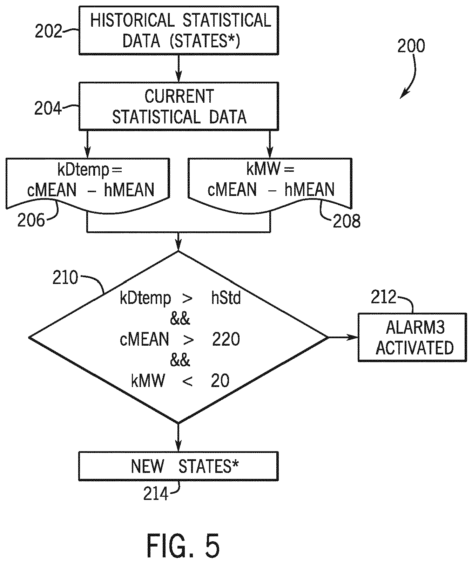

FIG. 5 is a figure of a flowchart illustrating an embodiment of a process 200 suitable for deriving certain "D" sump 67 conditions based on measured temperatures in combination with measured power (e.g., Megawatts produced by the gas turbine system 12). The process 200 may be implemented as computer code or instructions stored in the memory 40 and executable via the processor 39. Additionally or alternatively, the process 200 may be implemented in hardware, such as in a custom chip, FPGA chip, and so on.

In the depicted embodiment, the process 200 may first derive (block 202) a historical statistical data, such as a historical standard deviation, mean, max, min, and so on, via the historical models 104 using temperature and power production. That is, a first of the historical models 104 may be used to derive the temperature-based historical statistical data based on an embodiment of the graph 110 temperature and/or number of fired hours. A second of the historical models 104 may then be used to derive the power-based historical statistical data based on an embodiment of the graph 110 temperature and/or number of fired hours

The process 200 may then derive (block 204) a first current statistical data such as a current standard deviation, mean, max, min based for example, on temperature sensor data for the sensors 42 disposed in the lubrication fluid reservoir 52. Block 204 may additionally derive a second current statistical data such as a current standard deviation, mean, max, min based for example, on power generation sensor data for the sensors 42 disposed in the gas turbine system 12. The process may then derive (block 206) a kDtemp value based on the difference of the current temperature Mean (derived in block 204) with the historical temperature Mean (derived in block 202). The process may also derive (block 208) a kMW value by taking the difference of the current power production (e.g., in Megawatts) Mean (derived in block 204) with the historical power production (e.g., in Megawatts) Mean (derived in block 202). It is to be ntoed that the kMW value is intended as a variable that is used for derivation by the process 200, and does not connote kilo-mega-watts.

If the kDtemp value is greater than a historical standard deviation and the current temperature Mean is greater than some first comparison value, such as a temperature of 220°F and KMW is less than some second comparison value, such as a value of 20 Megawatts (decision 210), then the process 200 will activate (block 212) an alarm, such as alarm 3. It is to be understood that a variety of first comparison temperature values and second comparison power values may be used depending on the model of the gas turbine system 12 and/or lubrication system 50 being used. If the kDtemp value is not greater than the historical standard deviation or the current temperature Mean is less than the first comparison value or KMW is equal to or greater than the second comparison value (decision 210) then the alarm is not activated and new states are created (block 214). The creation of the new states (block 214) in this embodiment may involve incorporating the currently sensed temperature and power data into the historical models 104, for example, to capture degradation, operational environment differences, and so on. In this manner, the graphs 110 of the models 104 may be updated and maybe used during the next iteration of the process 200.

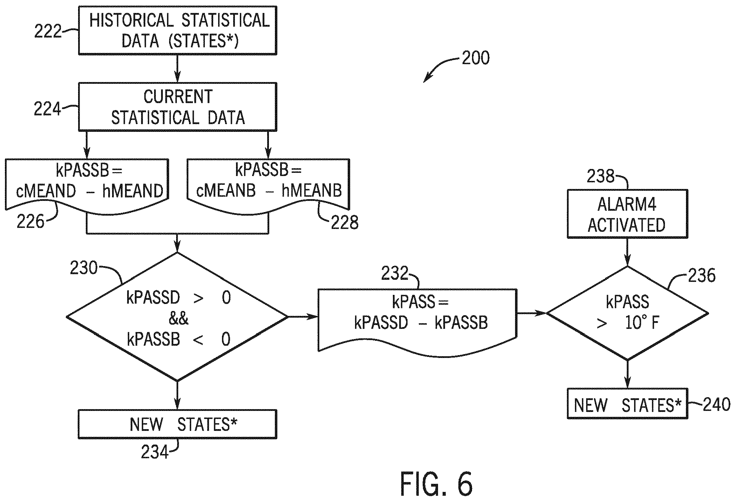

FIG. 6 is a figure of a flowchart illustrating an embodiment of a process 220 suitable for deriving certain lubrication system 50 conditions based on temperatures measurements for both "D" sump 67 and "B" sump 65. Indeed, a variety of sensed measurements for components of the lubrication system 50 and/or the gas turbine system 12 may be combined in one process, such as process 220, and used to derive certain conditions. The process 220 may be implemented as computer code or instructions stored in the memory 40 and executable via the processor 39. Additionally or alternatively, the process 220 may be implemented in hardware, such as in a custom chip, FPGA chip, and so on.

In the depicted embodiment, the process 220 may first derive (block 222) a historical statistical data, such as a historical standard deviation, mean, max, min, and so on, via the historical models 104 using temperatures for "D" sump 67 and "B" sump 65.. That is, a first of the historical models 104 may be used to derive the temperature-based historical statistical data based on an embodiment of the graph 110 temperature and/or number of fired hours for "D" sump 67. A second of the historical models 104 may then be used to derive the temperature-based historical statistical data based on an embodiment of the graph 110 temperature and/or number of fired hours for "B" sump 65.

The process 220 may then derive (block 224) a first current statistical data such as a current standard deviation, mean, max, min based for example, on temperature sensor data for the sensors 42 disposed on the "D" sump 67. Block 224 may additionally derive a second current statistical data such as a current standard deviation, mean, max, min based for example, on temperature sensor data for the sensors 42 disposed in the "B" sump 65. The process 220 may then derive (block 226) a kPassD value based on the difference of the current "D" sump temperature Mean (derived in block 224) with the historical "D" sump temperature Mean (derived in block 222). The process may also derive (block 228) a kPassB value based on the difference of the current "B" sump temperature Mean (derived in block 224) with the historical "B" sump temperature Mean (derived in block 222).

If the kPassD value is greater than zero and the kPassB value is less than zero (decision 230) then the process 220 may derive (block 232) a kPass value based on the difference between kPassD and kPassB. If the kPassD value is not greater than zero or the kPassB value is less than zero (decision 230) then the process 220 may create (block 234) one or more new states. The creation of the new states (block 234) in this embodiment may involve incorporating the currently sensed temperatures for both the "D" sump 67 and the "B" sump 65 into the historical models 104, for example, to capture degradation, operational environment differences, and so on. In this manner, the graphs 110 of the models 104 may be updated and may be used during the next iteration of the process 220.

If kPass is greater than some comparison value, such as a temperature of 10°F (decision 236), then the process 220 will activate (block 238) an alarm, such as alarm 4. It is to be understood that a variety of comparison temperature values may be used depending on the model of the gas turbine system 12 and/or lubrication system 50 being used. If the kPass value is not greater than the comparison value then (decision 236) then the alarm is not activated and new states are created (block 240). The creation of the new states (block 240) in this embodiment may involve incorporating the currently sensed temperatures from "D" sump 67 and "B" sump 65 into the historical models 104, for example, to capture degradation, operational environment differences, and so on.

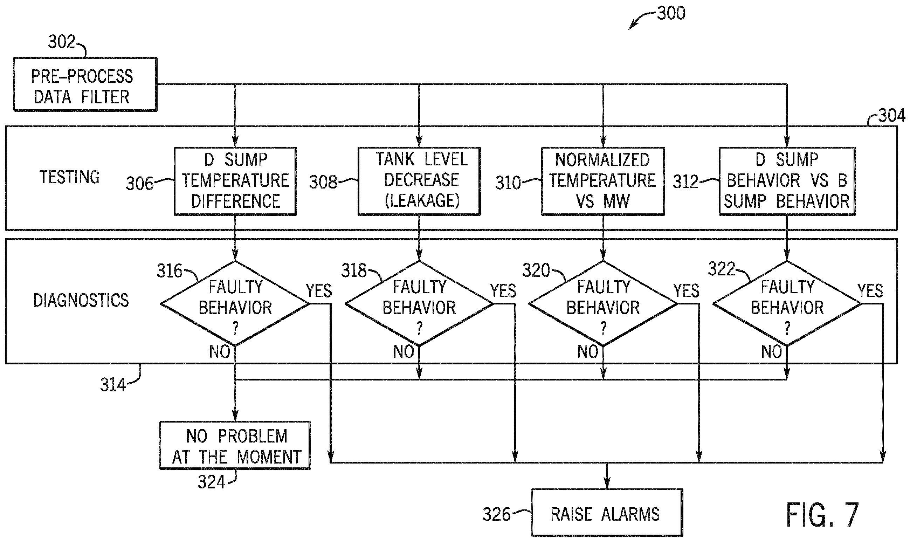

Turning now to FIG. 7, the figure illustrates a flowchart of an embodiment of a process 300 suitable for combining a variety of measurement types (e.g., temperatures, fluid levels, power) from a variety of systems (e.g., sumps, fluid reservoirs, gas turbine systems) to derive certain lubrication system 50 and/or gas turbine system 12 conditions. The process 300 may be implemented as computer code or instructions stored in the memory 40 and executable via the processor 39. Additionally or alternatively, the process 300 may be implemented in hardware, such as in a custom chip, FPGA chip, and so on.

In the depicted embodiment, the process 300 may first pre-process (block 302) data being received via the sensors 42, such as real-time data. The pre-processing (block 302) may be used, for example, to determine in which operating states (e.g., startup operations, baseload operations, shutdown operations, trip operations) are gas turbine system 12 operations currently being run. That, is the data maybe filtered (block 302) to only belong to one (or more) of the operating states. The process 300 may then run certain tests 304, such as comparison tests 306, 308, 310, and/or 312 with respective diagnostics 314, such as diagnostics 316, 318, 320, 322. For example, the test 306 may compare "D" sump 67 temperatures as described above with respect to process 150 and then execute diagnostics 316 (e.g., decision 158). Likewise, the test 308 may compare fluid levels (e.g., lubrication reservoir 52 levels) as described above with respect to process 180 and then execute diagnostics 318 (e.g., decision 188). Similarly, the test 310 may compare temperatures (e.g., "D" sump 67 temperatures) and power production (e.g., gas turbine system 12 power) as described above with respect to process 200 and then execute diagnostics 320 (e.g., decision 210).

Additionally, the test 312 may compare multiple component temperatures, such as "D" sump 67 and "B" sump 65 temperatures as described above with respect to process 220 and then execute diagnostics 322 (e.g., decisions 230, 236). Diagnostics 314 may then be executed to determine, e.g., via decisions 316, 318, 320, 322, undesired conditions, such as leakage, excessive lubrication consumption, increased friction (e.g., bearing issues, abrasion), and the like. If no issues are found, the operations may continue (block 324). Issues found may then raise alarms (block 326), such as alarms 1, 2, 3, 4 described above with respect to processes 150, 180, 200, and 220, respectively. It is to be noted that the decisions 316, 318, 320, 322 may be weighed. For example, more weight may be given to decision 318 for determining leakage issues. Likewise, more weight would be given to decision 316 for determining "D" sump 67 issues. In this manner, the processes 150, 180, 200, and 220 may be combined, thus improving accuracy.

Technical effects of the disclosed embodiments include providing systems and methods for determining certain conditions of lubrication fluid system and/or a gas turbine system. In one embodiment, a model is constructed, which may advantageously model a gas turbine lubrication, and incorporate as input a variety of temperature, pressure and level sensor readings. The model may include one or more submodels, such as historical submodels and current operations submodels. The historical submodels may be used to derive baseline information (e.g., expected oil level, temperatures, pressures) while the current operations submodels may derive conditions based on current sensor readings. The current operations submodel derivations may then be compared to the historical submodel via a process described in more detail below, and the comparison may then be used to predict certain lubrication system conditions. Further, a feedback loop may be used to "evolve" the historical submodels, resulting in more accurate and efficient predictions. The models may apply various statistical techniques as described above, resulting in more efficient derivations.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A power production system, comprising:
   a gas turbine system configured to combust a fuel to produce a power;
   a lubrication system fluidly coupled to the gas turbine system and configured to move a lubricant through the gas turbine system during operations of the gas turbine system; and
   a processor communicatively coupled to the power production system, the processor configured to:
      receive input data from one or more sensors disposed on the gas turbine system, the lubrication system, or the combination thereof; and
      execute one or more models to derive a condition of the lubrication system, the gas turbine system, or a combination thereof.
2. The system clause 1, wherein the processor is configured to execute the one or more models during operations of the gas turbine system to derive the condition, wherein the processor is included in a monitoring system, in a controller, or in a combination thereof, and wherein the controller is configured to control operations of the gas turbine system to produce the power.
3. The system of any preceding clause, wherein the one or more models comprise a historical model configured to derive a baseline and a current model configured to derive one or more current operation metrics, and wherein the processor is configured to derive the condition based on a comparison between the current operation metrics and the baseline.
4. The system of any preceding clause, wherein the historical model comprises a historical statistical model and the baseline comprises a curve having an x-axis comprising a gas turbine fired hours and a y-axis comprising a temperature, a fluid level, a pressure, a fluid flow, or a combination thereof.
5. The system of any preceding clause, wherein the processor is configured to derive the condition by calculating one or more points via the current model and then comparing the one or more points against the curve.
6. The system of any preceding clause, wherein the historical model comprises a range based on a standard deviation measure from the curve, and wherein the processor is configured to derive the condition based on if the one or more points falls inside the range.
7. The system of any preceding clause, wherein the lubrication system comprises a first sump system fluidly coupled to the gas turbine system and wherein a first model of the one or more models is configured to model the first sump system.
8. The system of any preceding clause, wherein the first sump system comprises a "D" sump system configured to lubricate a turbine section of the gas turbine system.
9. The system of any preceding clause, wherein the lubrication system comprises a first sump system fluidly coupled to the gas turbine system and wherein a second model of the one or more models is configured to model the second sump system.
10. The system of any preceding clause, wherein a second model of the one or more models is configured to model a megawatt measurement of the power.
11. A monitoring system, comprising:
   a processor, wherein the processor is configured to:
      monitor operations of a gas turbine engine system;
      receive input data from one or more sensors disposed on the gas turbine system, a lubrication system, or the combination thereof; and
      execute one or more models to derive a condition of the lubrication system, the gas turbine system, or a combination thereof, wherein the one or more models comprises a historical model and a current model, and wherein the lubrication system is configured to move lubricant through the gas turbine engine system.
12. The system of any preceding clause, wherein the processor is configured to execute the one or more models during operations of the gas turbine system to derive the condition.
13. The system of any preceding clause, wherein the historical model is configured to derive a baseline and the current model configured to derive one or more current operation metrics, and wherein the processor is configured to derive the condition based on a comparison between the current operation metrics and the baseline.
14. The system of any preceding clause, wherein the historical model comprises a historical statistics model having a historical standard deviation, a historical mean, a historical max, and historical min, or a combination thereof.
15. The system of any preceding clause, wherein the processor is configured to derive the condition based on a comparison between the current operation metrics and the historical mean by incorporating a range based on the historical standard deviation, the historical max, the historical min, or a combination thereof.
16. A method, comprising:
   monitoring, via a processor, operations of a gas turbine engine system;
   receiving, via the processor, input data from one or more sensors disposed on
   the gas turbine system, a lubrication system, or the combination thereof; and
   executing, via the processor, one or more models to derive a condition of the lubrication system, the gas turbine system, or a combination thereof, wherein the one or more models comprises a historical model and a current model, and wherein the lubrication system is configured to move lubricant through the gas turbine engine system.
17. The method of any preceding clause, comprising executing, via the processor, the one or more models during operations of the gas turbine system to derive the condition.
18. The method of any preceding clause, wherein the historical model is configured to derive a baseline and the current model configured to derive one or more current operation metrics, and wherein the processor is configured to derive the condition based on a comparison between the current operation metrics and the baseline.
19. The method of any preceding clause, wherein the historical model comprises a historical statistics model having a historical standard deviation, a historical mean, a historical max, and historical min, or a combination thereof.
20. The method of any preceding clause, wherein deriving the condition comprises a comparison between the current operation metrics and the historical mean by incorporating a range based on the historical standard deviation, the historical max, the historical min, or a combination thereof.

## Claims

1. A power production system, comprising:
a gas turbine system configured to combust a fuel to produce a power;
a lubrication system fluidly coupled to the gas turbine system and configured to move a lubricant through the gas turbine system during operations of the gas turbine system; and
a processor communicatively coupled to the power production system, the processor configured to:
receive input data from one or more sensors disposed on the gas turbine system, the lubrication system, or the combination thereof; and
execute one or more models to derive a condition of the lubrication system, the gas turbine system, or a combination thereof.

2. The system of claim 1, wherein the processor is configured to execute the one or more models during operations of the gas turbine system to derive the condition, wherein the processor is included in a monitoring system, in a controller, or in a combination thereof, and wherein the controller is configured to control operations of the gas turbine system to produce the power.

3. The system of claim 1 or 2, wherein the one or more models comprise a historical model configured to derive a baseline and a current model configured to derive one or more current operation metrics, and wherein the processor is configured to derive the condition based on a comparison between the current operation metrics and the baseline.

4. The system of claim 3, wherein the historical model comprises a historical statistical model and the baseline comprises a curve having an x-axis comprising a gas turbine fired hours and a y-axis comprising a temperature, a fluid level, a pressure, a fluid flow, or a combination thereof.

5. The system of any preceding claim, wherein the lubrication system comprises a first sump system fluidly coupled to the gas turbine system and wherein a first model of the one or more models is configured to model the first sump system.

6. The system of claim 5, wherein the first sump system comprises a "D" sump system configured to lubricate a turbine section of the gas turbine system.

7. The system of claim 5, wherein the lubrication system comprises a first sump system fluidly coupled to the gas turbine system and wherein a second model of the one or more models is configured to model the second sump system.

8. The system of claim 5, wherein a second model of the one or more models is configured to model a megawatt measurement of the power.

9. A monitoring system, comprising:
a processor, wherein the processor is configured to:
monitor operations of a gas turbine engine system;
receive input data from one or more sensors disposed on the gas turbine system, a lubrication system, or the combination thereof; and
execute one or more models to derive a condition of the lubrication system, the gas turbine system, or a combination thereof, wherein the one or more models comprises a historical model and a current model, and wherein the lubrication system is configured to move lubricant through the gas turbine engine system.

10. The system of claim 9, wherein the processor is configured to execute the one or more models during operations of the gas turbine system to derive the condition.

11. The system of claim 9 or 10, wherein the historical model is configured to derive a baseline and the current model configured to derive one or more current operation metrics, and wherein the processor is configured to derive the condition based on a comparison between the current operation metrics and the baseline.

12. The system of claim 9, 10 or 11, wherein the historical model comprises a historical statistics model having a historical standard deviation, a historical mean, a historical max, and historical min, or a combination thereof.

13. A method, comprising:
monitoring, via a processor, operations of a gas turbine engine system;
receiving, via the processor, input data from one or more sensors disposed on the gas turbine system, a lubrication system, or the combination thereof; and
executing, via the processor, one or more models to derive a condition of the lubrication system, the gas turbine system, or a combination thereof, wherein the one or more models comprises a historical model and a current model, and wherein the lubrication system is configured to move lubricant through the gas turbine engine system.

14. The method of claim 13, comprising executing, via the processor, the one or more models during operations of the gas turbine system to derive the condition.

15. The method of claim 13 or 14, wherein the historical model is configured to derive a baseline and the current model configured to derive one or more current operation metrics, and wherein the processor is configured to derive the condition based on a comparison between the current operation metrics and the baseline.
